# EUROPEAN PATENT SPECIFICATION

(11) **EP 3 673 605 B1**
(45) Date of publication and mention of the grant of the patent: **20.07.2022**
(21) Application number: 18769911.1
(22) Date of filing: 20.08.2018
(51) Int. Cl.: H04L 5/00, H04W 56/00, H04W 72/08

(54) **MULTIPLEXING CHANNEL STATE INFORMATION REFERENCE SIGNALS AND SYNCHRONIZATION SIGNALS IN NEW RADIO**
MULTIPLEXEN VON KANALZUSTANDSINFORMATIONSREFERENZSIGNALEN UND SYNCHRONISATIONSSIGNALEN IN NEW RADIO
MULTIPLEXAGE DE SIGNAUX DE RÉFÉRENCE D'INFORMATIONS D'ÉTAT DE CANAL ET DE SIGNAUX DE SYNCHRONISATION DANS UNE NOUVELLE TECHNOLOGIE RADIOÉLECTRIQUE

(30) Priority: 21.08.2017 US 201762548241 P; 17.08.2018 US 201816104333
(43) Date of publication of application: 01.07.2020
(73) Proprietor: QUALCOMM Incorporated, San Diego, CA 92121-1714 (US)
(72) Inventor: NAM, Wooseok, San Diego, California 92121-1714 (US); LUO, Tao, San Diego, California 92121-1714 (US); MANOLAKOS, Alexandros, San Diego, California 92121-1714 (US); GAAL, Peter, San Diego, California 92121-1714 (US); CEZANNE, Juergen, San Diego, California 92121-1714 (US); LEE, Heechoon, San Diego, California 92121-1714 (US)
(74) Representative: Bardehle Pagenberg Partnerschaft mbB Patentanwälte Rechtsanwälte
(86) International application number: PCT/US2018/047038
(87) International publication number: WO 2019/040352

(56) References cited:
- INTEL CORPORATION: "On multiplexing of different RS types", 3GPP DRAFT; R1-1712556 ON MULTIPLEXING OF DIFFERENT RS TYPES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, P.R. Czech; 20170821 - 20170825 20 August 2017 (2017-08-20), XP051315372, Retrieved from the Internet: URL:http://www.3gpp.org/ftp/Meetings_3GPP_ SYNC/RAN1/Docs/ [retrieved on 2017-08-20]
- VIVO: "Discussion on CSI-RS", 3GPP DRAFT; R1-1712841_DISCUSSION ON CSI-RS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, P.R. Czech; 20170821 - 20170825 20 August 2017 (2017-08-20), XP051315653, Retrieved from the Internet: URL:http://www.3gpp.org/ftp/Meetings_3GPP_ SYNC/RAN1/Docs/ [retrieved on 2017-08-20]
- LG ELECTRONICS: "CSI-RS based RRM measurement for L3 mobility", 3GPP DRAFT; R1-1713133 CSI-RS BASED MEASUREMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20170821 - 20170825 20 August 2017 (2017-08-20), XP051315942, Retrieved from the Internet: URL:http://www.3gpp.org/ftp/Meetings_3GPP_ SYNC/RAN1/Docs/ [retrieved on 2017-08-20]
- ZTE: "Discussion on multiplexing of different RSs", 3GPP DRAFT; R1-1712302 DISCUSSION ON MULTIPLEXING OF DIFFERENT RSS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG1, no. Prague, Czechia; 20170821 - 20170825 20 August 2017 (2017-08-20), XP051315118, Retrieved from the Internet: URL:http://www.3gpp.org/ftp/Meetings_3GPP_ SYNC/RAN1/Docs/ [retrieved on 2017-08-20]

## Description

### CROSS-REFERENCE TO RELATED APPLICATIONS

This application claims priority to U.S. Application No. 16/104,333, filed August 17, 2018, which claims priority to and the benefit of U.S. Provisional Application No. 62/548,241, filed August 21, 2017.

### BACKGROUND

### FIELD OF THE DISCLOSURE

Aspects of the present disclosure relate to wireless communications, and more particularly, to multiplexing channel state information (CSI) reference signals (CSI-RSs) and synchronization signals in wireless communications systems operating according to new radio (NR), e.g., 5^{th} generation (5G), techniques.

### DESCRIPTION OF RELATED ART

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include Long Term Evolution (LTE) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

In some examples, a wireless multiple-access communication system may include a number of base stations, each simultaneously supporting communication for multiple communication devices, otherwise known as user equipment (UEs). In LTE or LTE-A network, a set of one or more base stations may define an eNodeB (eNB). In other examples (e.g., in a next generation or 5G network), a wireless multiple access communication system may include a number of distributed units (DUs) (e.g., edge units (EUs), edge nodes (ENs), radio heads (RHs), smart radio heads (SRHs), transmission reception points (TRPs), etc.) in communication with a number of central units (CUs) (e.g., central nodes (CNs), access node controllers (ANCs), etc.), where a set of one or more distributed units, in communication with a central unit, may define an access node (e.g., a new radio base station (NR BS), a new radio node-B (NR NB), a network node, 5G NB, gNB, etc.). A base station or DU may communicate with a set of UEs on downlink channels (e.g., for transmissions from a base station or to a UE) and uplink channels (e.g., for transmissions from a UE to a base station or distributed unit).

These multiple access technologies have been adopted in various telecommunication standards to provide a common protocol that enables different wireless devices to communicate on a municipal, national, regional, and even global level. An example of an emerging telecommunication standard is new radio (NR), for example, 5G radio access. NR is a set of enhancements to the LTE mobile standard promulgated by Third Generation Partnership Project (3GPP). It is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL) as well as support beamforming, multiple-input multiple-output (MIMO) antenna technology, and carrier aggregation.

However, as the demand for mobile broadband access continues to increase, there exists a need for further improvements in NR technology. Preferably, these improvements should be applicable to other multi-access technologies and the telecommunication standards that employ these technologies.

INTEL CORPORATION: "On multiplexing of different RS types",vol. RAN WG1, no. Prague, P.R. Czech; 20170821 - 20170825 20 August 2017 (2017-08-20), XP051315372, relates to CSI determination in case of SS block overlapped with CSI-RS.

### BRIEF SUMMARY

The invention is defined by the independent claims 1, 14 and 15, with the dependent claims providing further aspects of the invention. The systems, methods, and devices of the disclosure each have several aspects, no single one of which is solely responsible for its desirable attributes. Without limiting the scope of this disclosure as expressed by the claims which follow, some features will now be discussed briefly. After considering this discussion, and particularly after reading the section entitled "Detailed Description" one will understand how the features of this disclosure provide advantages that include improved communications between access points and stations in a wireless network.

Aspects of the present disclosure provide a method for wireless communications by a user equipment (UE). The method generally includes sampling subcarriers of a synchronization signal (SS) block based on a frequency density of channel state information (CSI) reference signals (CSI-RSs) multiplexed in a symbol period with the SS block, and performing at least one of: measuring at least one of reference signal received power (RSRP) or CSI, based on the sampled subcarriers and the CSI-RSs, or reporting at least one of the RSRP or the CSI, based on the sampled subcarriers and the CSI-RSs.

Aspects of the present disclosure provide an apparatus for wireless communications. The apparatus generally includes a processor configured to cause the apparatus to sample subcarriers of a synchronization signal (SS) block based on a frequency density of channel state information (CSI) reference signals (CSI-RSs) multiplexed in a symbol period with the SS block and to perform at least one of: causing the apparatus to measure at least one of reference signal received power (RSRP) or CSI, based on the sampled subcarriers and the CSI-RSs, or causing the apparatus to report at least one of the RSRP or the CSI, based on the sampled subcarriers and the CSI-RSs; and a memory coupled with the processor.

Aspects of the present disclosure provide an apparatus for wireless communications. The apparatus generally includes means for sampling subcarriers of a synchronization signal (SS) block based on a frequency density of channel state information (CSI) reference signals (CSI-RSs) multiplexed in a symbol period with the SS block, and means for performing at least one of: measuring at least one of reference signal received power (RSRP) or CSI, based on the sampled subcarriers and the CSI-RSs, or reporting at least one of the RSRP or the CSI, based on the sampled subcarriers and the CSI-RSs.

Aspects of the present disclosure provide a computer-readable medium storing instructions that, when executed by a processing system, cause the processing system to perform operations generally including sampling subcarriers of a synchronization signal (SS) block based on a frequency density of channel state information (CSI) reference signals (CSI-RSs) multiplexed in a symbol period with the SS block, and performing at least one of: measuring at least one of reference signal received power (RSRP) or CSI, based on the sampled subcarriers and the CSI-RSs, or reporting at least one of the RSRP or the CSI, based on the sampled subcarriers and the CSI-RSs.

Aspects generally include methods, apparatus, systems, computer readable mediums, and processing systems, as substantially described herein with reference to and as illustrated by the accompanying drawings.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 is a block diagram conceptually illustrating an example telecommunications system, in accordance with certain aspects of the present disclosure.
FIG. 2 is a block diagram illustrating an example logical architecture of a distributed RAN, in accordance with certain aspects of the present disclosure.
FIG. 3 is a diagram illustrating an example physical architecture of a distributed RAN, in accordance with certain aspects of the present disclosure.
FIG. 4 is a block diagram conceptually illustrating a design of an example BS and user equipment (UE), in accordance with certain aspects of the present disclosure.
FIG. 5 is a diagram showing examples for implementing a communication protocol stack, in accordance with certain aspects of the present disclosure.
FIG. 6 illustrates an example of a DL-centric subframe, in accordance with certain aspects of the present disclosure.
FIG. 7 illustrates an example of an UL-centric subframe, in accordance with certain aspects of the present disclosure.
FIG. 8 example transmission timeline of synchronization signals for a new radio telecommunications system, in accordance with aspects of the present disclosure.
FIG. 9 illustrates an example resource mapping for an exemplary SS block, in accordance with aspects of the present disclosure.
FIG. 10 illustrates example operations that may be performed by a user equipment (UE), in accordance with certain aspects of the present disclosure.
FIG. 11 illustrates an exemplary CSI-RS bandwidth and exemplary bandwidths of an SS block, in accordance with certain aspects of the present disclosure.
FIG. 12 illustrates exemplary techniques for puncturing REs of a CSI-RS that is multiplexed with a signal of an SS block, in accordance with certain aspects of the present disclosure.
FIG. 13 illustrates puncturing of a CSI-RS signal by an SSS signal in a bandwidth, in accordance with certain aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure provide apparatus, methods, processing systems, and computer readable mediums for new radio (NR) (new radio access technology or 5G technology).

NR may support various wireless communication services, such as Enhanced mobile broadband (eMBB) services targeting wide bandwidth (e.g., 80 MHz and wider) communications, millimeter wave (mmW) services targeting high carrier frequency (e.g., 27 GHz and higher) communications, massive machine-type communications (mMTC) services targeting non-backward compatible machine-type communications (MTC) communications, and/or mission critical services targeting ultra reliable low latency communications (URLLC). These services may include latency and reliability requirements. These services may also have different transmission time intervals (TTI) to meet respective quality of service (QoS) requirements. In addition, these services may co-exist in the same subframe.

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim. The word "exemplary" is used herein to mean "serving as an example, instance, or illustration." Any aspect described herein as "exemplary" is not necessarily to be construed as preferred or advantageous over other aspects.

The techniques described herein may be used for various wireless communication networks such as LTE, CDMA, TDMA, FDMA, OFDMA, SC-FDMA and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS). NR is an emerging wireless communications technology under development in conjunction with the 5G Technology Forum (5GTF). 3GPP Long Term Evolution (LTE) and LTE-Advanced (LTE-A) are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). The techniques described herein may be used for the wireless networks and radio technologies mentioned above as well as other wireless networks and radio technologies. For clarity, while aspects may be described herein using terminology commonly associated with 3G and/or 4G wireless technologies, aspects of the present disclosure can be applied in other generation-based communication systems, such as 5G and later, including NR technologies.

### EXAMPLE WIRELESS COMMUNICATIONS SYSTEM

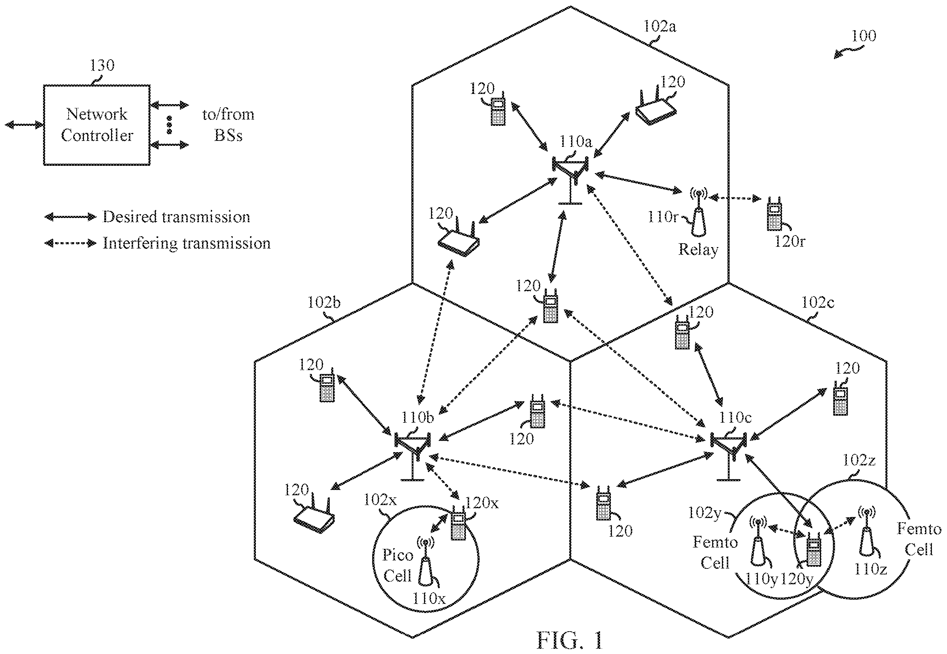

FIG. 1 illustrates an example wireless network 100 in which aspects of the present disclosure may be performed. For example, the wireless network may be a new radio (NR) or 5G network. NR wireless communication systems may employ beams, where a BS and UE communicate via active beams.

For illustrative purposes, aspects are described with reference to a primary BS and a secondary BS, wherein the secondary BS operates in a millimeter wave (mmW) frequency spectrum and the primary BS operations in a lower frequency spectrum that the secondary spectrum; however, aspects may not be limited to this example scenario.

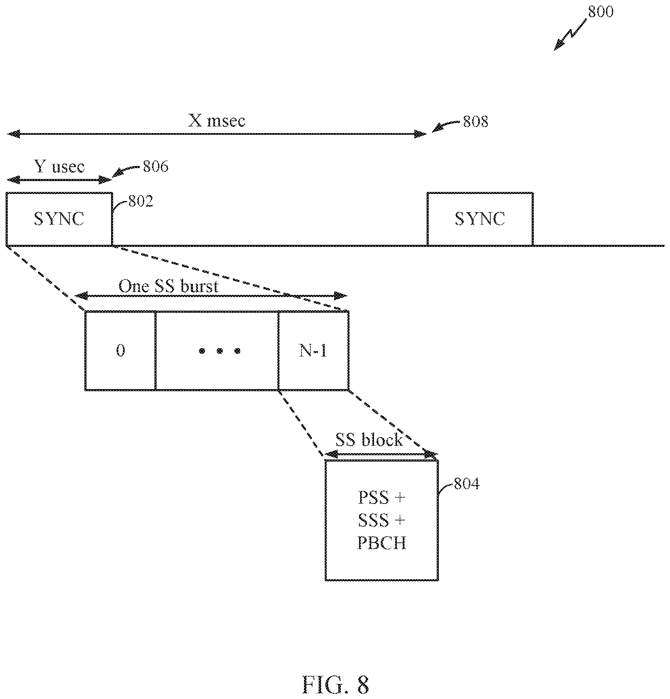

As described herein, for example, with respect to FIG. 8, a UE's initial access to a BS communicating via beams may be simplified with assistance from a BS operating in a lower frequency spectrum. With the assistance of the BS operating in a lower frequency spectrum, mmW resources may be conserved and, in certain scenarios, initial synchronization to the mmW network may completely or partly be bypassed.

UEs 120 may be configured to perform the operations 900 and methods described herein for determining a transmit power. BS 110 may comprise a transmission reception point (TRP), Node B (NB), 5G NB, access point (AP), new radio (NR) BS, Master BS, primary BS, etc.). The NR network 100 may include the central unit. The BS 110 may perform the operations 1000 and other methods described herein for providing assistance to a UE in determining a transmit power to use during a RACH procedure with another BS (e.g., a secondary BS).

A UE 120 may determine a transmit power for transmitting a message during a RACH procedure with a secondary BS, based at least in part, on communication between the UE and a primary BS. The UE may transmit the message to the secondary BS during the RACH procedure based, at least in part, on the determined transmit power.

A BS 110, such as a master BS or a primary BS, may communicate with the UE and may take one or more actions to assist the UE in setting a transmit power for transmitting a message during the RACH procedure with a secondary BS.

As illustrated in FIG. 1, the wireless network 100 may include a number of BSs 110 and other network entities. According to one example, the network entities including the BS and UEs may communicate on high frequencies (e.g., > 6 GHz) using beams. One or more BS may also communicate at a lower frequency (e.g., < 6GHz). The one or more BS configured to operate in a high frequency spectrum and the one or more BS configured to operate in a lower frequency spectrum may be co-located.

A BS may be a station that communicates with UEs. Each BS 110 may provide communication coverage for a particular geographic area. In 3GPP, the term "cell" can refer to a coverage area of a Node B and/or a Node B subsystem serving this coverage area, depending on the context in which the term is used. In NR systems, the term "cell" and gNB, Node B, 5G NB, AP, NR BS, NR BS, or TRP may be interchangeable. In some examples, a cell may not necessarily be stationary, and the geographic area of the cell may move according to the location of a mobile base station. In some examples, the base stations may be intercormected to one another and/or to one or more other base stations or network nodes (not shown) in the wireless network 100 through various types of backhaul interfaces such as a direct physical connection, a virtual network, or the like using any suitable transport network.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a frequency channel, etc. Each frequency may support a single RAT in a given geographic area in order to avoid interference between wireless networks of different RATs. In some cases, NR or 5G RAT networks may be deployed.

A BS may provide communication coverage for a macro cell, a pico cell, a femto cell, and/or other types of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS. In the example shown in FIG. 1, the BSs 110a, 110b and 110c may be macro BSs for the macro cells 102a, 102b and 102c, respectively. The BS 110x may be a pico BS for a pico cell 102x. The BSs 110y and 110z may be femto BS for the femto cells 102y and 102z, respectively. A BS may support one or multiple (e.g., three) cells.

The wireless network 100 may also include relay stations. A relay station is a station that receives a transmission of data and/or other information from an upstream station (e.g., a BS or a UE) and sends a transmission of the data and/or other information to a downstream station (e.g., a UE or a BS). A relay station may also be a UE that relays transmissions for other UEs. In the example shown in FIG. 1, a relay station 110r may communicate with the BS 110a and a UE 120r in order to facilitate communication between the BS 110a and the UE 120r. A relay station may also be referred to as a relay BS, a relay, etc.

The wireless network 100 may be a heterogeneous network that includes BSs of different types, e.g., macro BS, pico BS, femto BS, relays, etc. These different types of BSs may have different transmit power levels, different coverage areas, and different impact on interference in the wireless network 100. For example, macro BS may have a high transmit power level (e.g., 20 Watts) whereas pico BS, femto BS, and relays may have a lower transmit power level (e.g., 1 Watt).

The wireless network 100 may support synchronous or asynchronous operation. For synchronous operation, the BSs may have similar frame timing, and transmissions from different BSs may be approximately aligned in time. For asynchronous operation, the BSs may have different frame timing, and transmissions from different BSs may not be aligned in time. The techniques described herein may be used for both synchronous and asynchronous operation.

A network controller 130 may couple to a set of BSs and provide coordination and control for these BSs. The network controller 130 may communicate with the BSs 110 via a backhaul. The BSs 110 may also communicate with one another, e.g., directly or indirectly via wireless or wireline backhaul.

The UEs 120 (e.g., 120x, 120y, etc.) may be dispersed throughout the wireless network 100, and each UE may be stationary or mobile. A UE may also be referred to as a mobile station, a terminal, an access terminal, a subscriber unit, a station, a Customer Premises Equipment (CPE), a cellular phone, a smart phone, a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or medical equipment, a biometric sensor/device, a wearable device such as a smart watch, smart clothing, smart glasses, a smart wrist band, smart jewelry (e.g., a smart ring, a smart bracelet, etc.), an entertainment device (e.g., a music device, a video device, a satellite radio, etc.), a vehicular component or sensor, a smart meter/sensor, industrial manufacturing equipment, a global positioning system device, or any other suitable device that is configured to communicate via a wireless or wired medium. Some UEs may be considered evolved or machine-type communication (MTC) devices or evolved MTC (eMTC) devices. MTC and eMTC UEs include, for example, robots, drones, remote devices, sensors, meters, monitors, location tags, etc., that may communicate with a BS, another device (e.g., remote device), or some other entity. A wireless node may provide, for example, connectivity for or to a network (e.g., a wide area network such as Internet or a cellular network) via a wired or wireless communication link. Some UEs may be considered Intemet-of-Things (IoT) devices.

In FIG. 1, a solid line with double arrows indicates desired transmissions between a UE and a serving BS, which is a BS designated to serve the UE on the downlink and/or uplink. A dashed line with double arrows indicates interfering transmissions between a UE and a BS.

Certain wireless networks (e.g., LTE) utilize orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (called a 'resource block') may be 12 subcarriers (or 180 kHz). Consequently, the nominal FFT size may be equal to 128, 256, 512, 1024 or 2048 for system bandwidth of 1.25, 2.5, 5, 10 or 20 megahertz (MHz), respectively. The system bandwidth may also be partitioned into subbands. For example, a subband may cover 1.08 MHz (i.e., 6 resource blocks), and there may be 1, 2, 4, 8 or 16 subbands for system bandwidth of 1.25, 2.5, 5, 10 or 20 MHz, respectively.

While aspects of the examples described herein may be associated with LTE technologies, aspects of the present disclosure may be applicable with other wireless communications systems, such as NR.

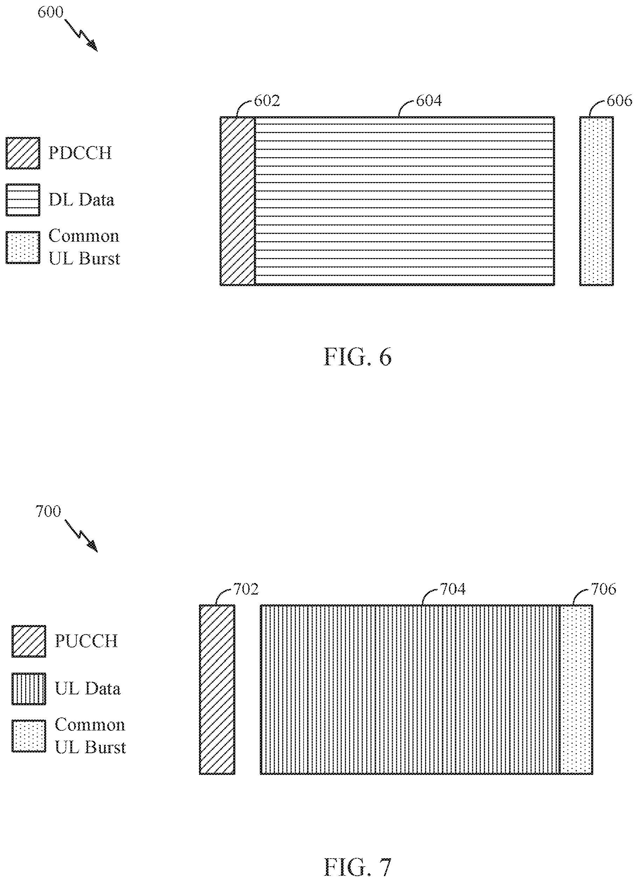

NR may utilize OFDM with a CP on the uplink and downlink and include support for half-duplex operation using TDD. A single component carrier bandwidth of 100 MHz may be supported. NR resource blocks may span 12 sub-carriers with a subcarrier bandwidth of 75 kfiz over a 0.1 ms duration. Each radio frame may consist of 2 half-frames, each half-frame consisting of 5 subframes, with a length of 10 ms. Consequently, each subframe may have a length of 1 ms. Each subframe may indicate a link direction (i.e., DL or UL) for data transmission and the link direction for each subframe may be dynamically switched. Each subframe may include DL/UL data as well as DL/UL control data. UL and DL subframes for NR may be as described in more detail below with respect to FIGs. 6 and 7. Beamforming may be supported and beam direction may be dynamically configured. MIMO transmissions with precoding may also be supported. MIMO configurations in the DL may support up to 8 transmit antennas with multi-layer DL transmissions up to 8 streams and up to 2 streams per UE. Multi-layer transmissions with up to 2 streams per UE may be supported. Aggregation of multiple cells may be supported with up to 8 serving cells. Alternatively, NR may support a different air interface, other than an OFDM-based. NR networks may include entities such CUs and/or DUs.

In some examples, access to the air interface may be scheduled, wherein a scheduling entity (e.g., a base station) allocates resources for communication among some or all devices and equipment within its service area or cell. Within the present disclosure, as discussed further below, the scheduling entity may be responsible for scheduling, assigning, reconfiguring, and releasing resources for one or more subordinate entities. That is, for scheduled communication, subordinate entities utilize resources allocated by the scheduling entity. Base stations are not the only entities that may function as a scheduling entity. That is, in some examples, a UE may function as a scheduling entity, scheduling resources for one or more subordinate entities (e.g., one or more other UEs). In this example, the UE is functioning as a scheduling entity, and other UEs utilize resources scheduled by the UE for wireless communication. A UE may function as a scheduling entity in a peer-to-peer (P2P) network, and/or in a mesh network. In a mesh network example, UEs may optionally communicate directly with one another in addition to communicating with the scheduling entity.

Thus, in a wireless communication network with a scheduled access to time-frequency resources and having a cellular configuration, a P2P configuration, and a mesh configuration, a scheduling entity and one or more subordinate entities may communicate utilizing the scheduled resources.

As noted above, a RAN may include a CU and DUs. A NR BS (e.g., gNB, 5G Node B, Node B, transmission reception point (TRP), access point (AP)) may correspond to one or multiple BSs. NR cells can be configured as access cell (ACells) or data only cells (DCells). For example, the RAN (e.g., a central unit or distributed unit) can configure the cells. DCells may be cells used for carrier aggregation or dual connectivity, but not used for initial access, cell selection/reselection, or handover. In some cases DCells may not transmit synchronization signals-in some case cases DCells may transmit SS. NR BSs may transmit downlink signals to UEs indicating the cell type. Based on the cell type indication, the UE may communicate with the NR BS. For example, the UE may determine NR BSs to consider for cell selection, access, handover, and/or measurement based on the indicated cell type.

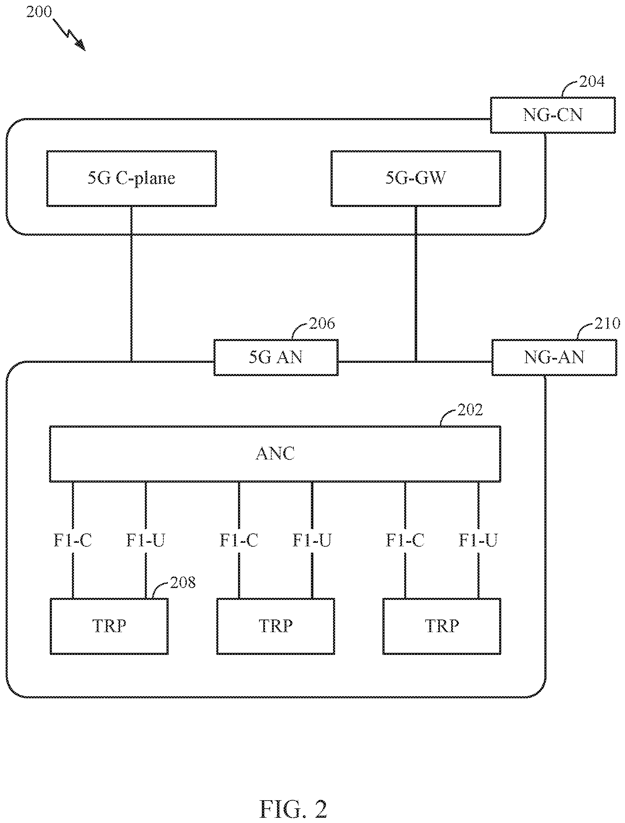

FIG. 2 illustrates an example logical architecture of a distributed radio access network (RAN) 200, which may be implemented in the wireless communication system illustrated in FIG. 1. A 5G access node 206 may include an access node controller (ANC) 202. The ANC may be a central unit (CU) of the distributed RAN 200. The backhaul interface to the next generation core network (NG-CN) 204 may terminate at the ANC. The backhaul interface to neighboring next generation access nodes (NG-ANs) may terminate at the ANC. The ANC may include one or more TRPs 208 (which may also be referred to as BSs, NR BSs, Node Bs, 5G NBs, APs, or some other term). As described above, a TRP may be used interchangeably with "cell."

The TRPs 208 may be a DU. The TRPs may be connected to one ANC (ANC 202) or more than one ANC (not illustrated). For example, for RAN sharing, radio as a service (RaaS), and service specific AND deployments, the TRP may be connected to more than one ANC. A TRP may include one or more antenna ports. The TRPs may be configured to individually (e.g., dynamic selection) or jointly (e.g., joint transmission) serve traffic to a UE.

The local architecture 200 may be used to illustrate fronthaul definition. The architecture may be defined that support fronthauling solutions across different deployment types. For example, the architecture may be based on transmit network capabilities (e.g., bandwidth, latency, and/or jitter).

The architecture may share features and/or components with LTE. According to aspects, the next generation AN (NG-AN) 210 may support dual connectivity with NR. The NG-AN may share a common fronthaul for LTE and NR.

The architecture may enable cooperation between and among TRPs 208. For example, cooperation may be preset within a TRP and/or across TRPs via the ANC 202. According to aspects, no inter-TRP interface may be needed or present.

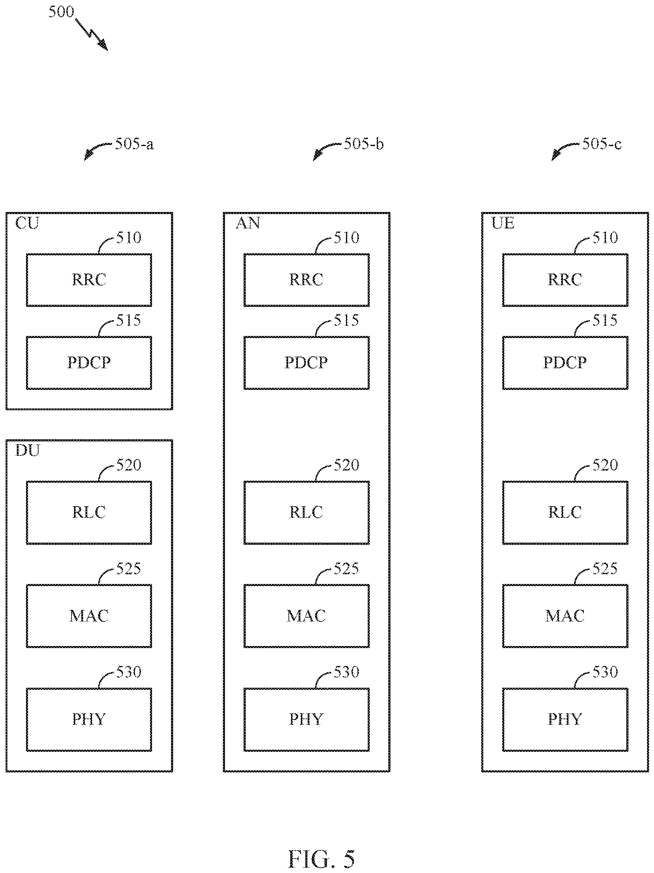

According to aspects, a dynamic configuration of split logical functions may be present within the architecture 200. As will be described in more detail with reference to FIG. 5, the Radio Resource Control (RRC) layer, Packet Data Convergence Protocol (PDCP) layer, Radio Link Control (RLC) layer, Medium Access Control (MAC) layer, and a Physical (PHY) layers may be adaptably placed at the DU or CU (e.g., TRP or ANC, respectively). According to certain aspects, a BS may include a central unit (CU) (e.g., ANC 202) and/or one or more distributed units (e.g., one or more TRPs 208).

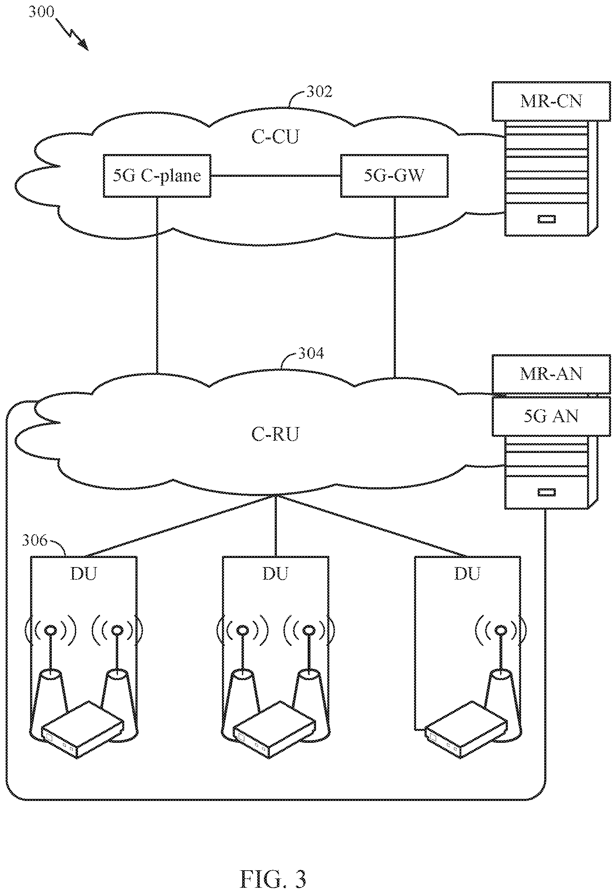

FIG. 3 illustrates an example physical architecture of a distributed RAN 300, according to aspects of the present disclosure. A centralized core network unit (C-CU) 302 may host core network functions. The C-CU may be centrally deployed. C-CU functionality may be offloaded (e.g., to advanced wireless services (AWS)), in an effort to handle peak capacity.

A centralized RAN unit (C-RU) 304 may host one or more ANC functions. Optionally, the C-RU may host core network functions locally. The C-RU may have distributed deployment. The C-RU may be closer to the network edge.

A DU 306 may host one or more TRPs (edge node (EN), an edge unit (EU), a radio head (RH), a smart radio head (SRH), or the like). The DU may be located at edges of the network with radio frequency (RF) functionality.

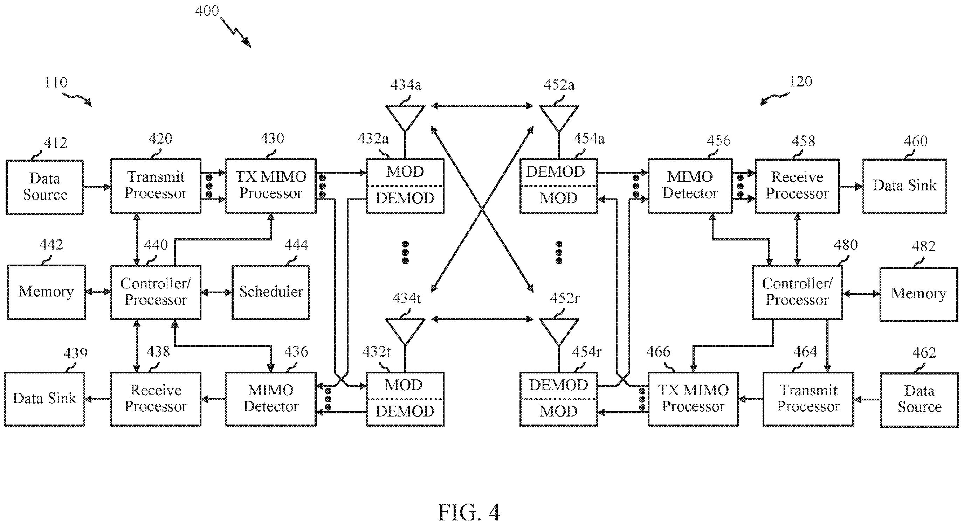

FIG. 4 shows a block diagram of a design of a BS 110 and a UE 120, which may be one of the BSs and one of the UEs in FIG. 1. The BS and UE may be used to implement aspects of the present disclosure. The BS may include a TRP and may be referred to as a Master eNB (MeNB) (e.g., Master BS, primary BS). According to aspects, the Master BS may operate at lower frequencies, for example, below 6 GHz and a Secondary BS may operate at higher frequencies, for example, mmW frequencies above 6 GHz. The Master BS and the Secondary BS may be geographically co-located. For a restricted association scenario, the base station 110 may be the macro BS 110c in FIG. 1, and the UE 120 may be the UE 120y. The base station 110 may also be a base station of some other type. The base station 110 may be equipped with antennas 434a through 434t, and the UE 120 may be equipped with antennas 452a through 452r.

At the base station 110, a transmit processor 420 may receive data from a data source 412 and control information from a controller/processor 440. The control information may be for the Physical Broadcast Channel (PBCH), Physical Control Format Indicator Channel (PCFICH), Physical Hybrid ARQ Indicator Channel (PHICH), Physical Downlink Control Channel (PDCCH), etc. The data may be for the Physical Downlink Shared Channel (PDSCH), etc. The processor 420 may process (e.g., encode and symbol map) the data and control information to obtain data symbols and control symbols, respectively. The processor 420 may also generate reference symbols, e.g., for the PSS, SSS, and cell-specific reference signal (CRS). A transmit (TX) multiple-input multiple-output (MIMO) processor 430 may perform spatial processing (e.g., precoding) on the data symbols, the control symbols, and/or the reference symbols, if applicable, and may provide output symbol streams to the modulators (MODs) 432a through 432t. Each modulator 432 may process a respective output symbol stream (e.g., for OFDM, etc.) to obtain an output sample stream. Each modulator 432 may further process (e.g., convert to analog, amplify, filter, and upconvert) the output sample stream to obtain a downlink signal. Downlink signals from modulators 432a through 432t may be transmitted via the antennas 434a through 434t, respectively.

At the UE 120, the antennas 452a through 452r may receive the downlink signals from the base station 110 and may provide received signals to the demodulators (DEMODs) 454a through 454r, respectively. Each demodulator 454 may condition (e.g., filter, amplify, downconvert, and digitize) a respective received signal to obtain input samples. Each demodulator 454 may further process the input samples (e.g., for OFDM, etc.) to obtain received symbols. A MIMO detector 456 may obtain received symbols from all the demodulators 454a through 454r, perform MIMO detection on the received symbols if applicable, and provide detected symbols. A receive processor 458 may process (e.g., demodulate, deinterleave, and decode) the detected symbols, provide decoded data for the UE 120 to a data sink 460, and provide decoded control information to a controller/processor 480.

On the uplink, at the UE 120, a transmit processor 464 may receive and process data (e.g., for the Physical Uplink Shared Channel (PUSCH)) from a data source 462 and control information (e.g., for the Physical Uplink Control Channel (PUCCH) from the controller/processor 480. The transmit processor 464 may also generate reference symbols for a reference signal. The symbols from the transmit processor 464 may be precoded by a TX MIMO processor 466 if applicable, further processed by the demodulators 454a through 454r (e.g., for SC-FDM, etc.), and transmitted to the base station 110. At the BS 110, the uplink signals from the UE 120 may be received by the antennas 434, processed by the modulators 432, detected by a MIMO detector 436 if applicable, and further processed by a receive processor 438 to obtain decoded data and control information sent by the UE 120. The receive processor 438 may provide the decoded data to a data sink 439 and the decoded control information to the controller/processor 440.

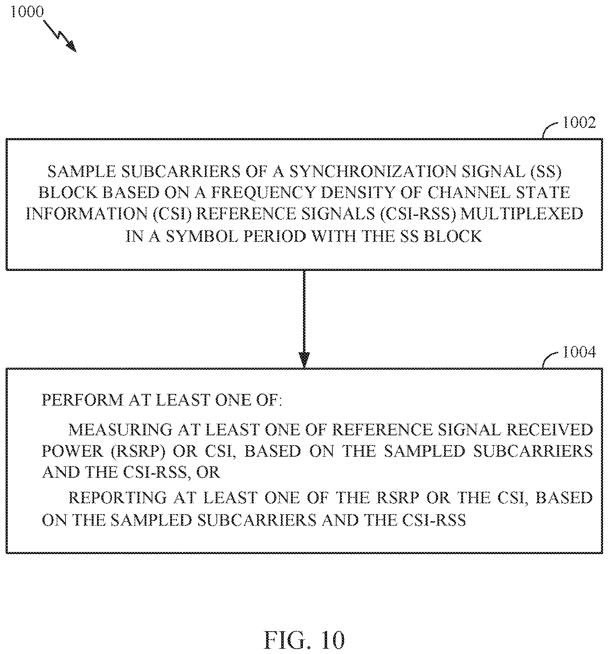

The controllers/processors 440 and 480 may direct the operation at the base station 110 and the UE 120, respectively. The processor 440 and/or other processors and modules at the base station 110 may perform or direct, e.g., the execution of the functional blocks illustrated in FIG. 10, and/or other processes for the techniques described herein. The memories 442 and 482 may store data and program codes for the BS 110 and the UE 120, respectively. A scheduler 444 may schedule UEs for data transmission on the downlink and/or uplink.

FIG. 5 illustrates a diagram 500 showing examples for implementing a communications protocol stack, according to aspects of the present disclosure. The illustrated communications protocol stacks may be implemented by devices operating in a in a 5G system. Diagram 500 illustrates a communications protocol stack including a Radio Resource Control (RRC) layer 510, a Packet Data Convergence Protocol (PDCP) layer 515, a Radio Link Control (RLC) layer 520, a Medium Access Control (MAC) layer 525, and a Physical (PHY) layer 530. In various examples the layers of a protocol stack may be implemented as separate modules of software, portions of a processor or ASIC, portions of non-collocated devices connected by a communications link, or various combinations thereof. Collocated and non-collocated implementations may be used, for example, in a protocol stack for a network access device (e.g., ANs, CUs, and/or DUs) or a UE.

A first option 505-a shows a split implementation of a protocol stack, in which implementation of the protocol stack is split between a centralized network access device (e.g., an ANC 202 in FIG. 2) and distributed network access device (e.g., DU 208 in FIG. 2). In the first option 505-a, an RRC layer 510 and a PDCP layer 515 may be implemented by the central unit, and an RLC layer 520, a MAC layer 525, and a PHY layer 530 may be implemented by the DU. In various examples the CLT and the DU may be collocated or non-collocated. The first option 505-a may be useful in a macro cell, micro cell, or pico cell deployment.

A second option 505-b shows a unified implementation of a protocol stack, in which the protocol stack is implemented in a single network access device (e.g., access node (AN), new radio base station (NR BS), a new radio Node-B (NRNB), a network node (NN), or the like.). In the second option, the RRC layer 510, the PDCP layer 515, the RLC layer 520, the MAC layer 525, and the PHY layer 530 may each be implemented by the AN. The second option 505-b may be useful in a femto cell deployment.

Regardless of whether a network access device implements part or all of a protocol stack, a UE may implement an entire protocol stack 505-c (e.g., the RRC layer 510, the PDCP layer 515, the RLC layer 520, the MAC layer 525, and the PHY layer 530).

FIG. 6 is a diagram 600 showing an example of a DL-centric subframe. The DL-centric subframe may include a control portion 602. The control portion 602 may exist in the initial or beginning portion of the DL-centric subframe. The control portion 602 may include various scheduling information and/or control information corresponding to various portions of the DL-centric subframe. In some configurations, the control portion 602 may be a physical DL control channel (PDCCH), as indicated in FIG. 6. The DL-centric subframe may also include a DL data portion 604. The DL data portion 604 may sometimes be referred to as the payload of the DL-centric subframe. The DL data portion 604 may include the communication resources utilized to communicate DL data from the scheduling entity (e.g., UE or BS) to the subordinate entity (e.g., UE). In some configurations, the DL data portion 604 may be a physical DL shared channel (PDSCH).

The DL-centric subframe may also include a common UL portion 606. The common UL portion 606 may sometimes be referred to as an UL burst, a common UL burst, and/or various other suitable terms. The common UL portion 606 may include feedback information corresponding to various other portions of the DL-centric subframe. For example, the common UL portion 606 may include feedback information corresponding to the control portion 602. Non-limiting examples of feedback information may include an ACK signal, a NACK signal, a HARQ indicator, and/or various other suitable types of information. The common UL portion 606 may include additional or alternative information, such as information pertaining to random access channel (RACH) procedures, scheduling requests (SRs), and various other suitable types of information. As illustrated in FIG. 6, the end of the DL data portion 604 may be separated in time from the beginning of the common UL portion 606. This time separation may sometimes be referred to as a gap, a guard period, a guard interval, and/or various other suitable terms. This separation provides time for the switch-over from DL communication (e.g., reception operation by the subordinate entity (e.g., UE)) to UL communication (e.g., transmission by the subordinate entity (e.g., UE)). One of ordinary skill in the art will understand that the foregoing is merely one example of a DL-centric subframe and alternative structures having similar features may exist without necessarily deviating from the aspects described herein.

FIG. 7 is a diagram 700 showing an example of an UL-centric subframe. The UL -centric subframe may include a control portion 702. The control portion 702 may exist in the initial or beginning portion of the UL-centric subframe. The control portion 702 in FIG. 7 may be similar to the control portion described above with reference to FIG. 6. The UL-centric subframe may also include an UL data portion 704. The UL data portion 704 may sometimes be referred to as the payload of the UL-centric subframe. The UL portion may refer to the communication resources utilized to communicate UL data from the subordinate entity (e.g., UE) to the scheduling entity (e.g., UE or BS). In some configurations, the control portion 702 may be a physical UL control channel (PUCCH).

As illustrated in FIG. 7, the end of the control portion 702 may be separated in time from the beginning of the UL data portion 704. This time separation may sometimes be referred to as a gap, guard period, guard interval, and/or various other suitable terms. This separation provides time for the switch-over from DL communication (e.g., reception operation by the scheduling entity) to UL communication (e.g., transmission by the scheduling entity). The UL-centric subframe may also include a common UL portion 706. The common UL portion 706 in FIG. 7 may be similar to the common UL portion 706 described above with reference to FIG. 7. The common UL portion 706 may additional or alternative include information pertaining to channel quality indicator (CQI), sounding reference signals (SRSs), and various other suitable types of information. One of ordinary skill in the art will understand that the foregoing is merely one example of an UL-centric subframe and alternative structures having similar features may exist without necessarily deviating from the aspects described herein.

In some circumstances, two or more subordinate entities (e.g., UEs) may communicate with each other using sidelink signals. Real-world applications of such sidelink communications may include public safety, proximity services, UE-to-network relaying, vehicle-to-vehicle (V2V) communications, Internet of Everything (IoE,) communications, IoT communications, mission-critical mesh, and/or various other suitable applications. Generally, a sidelink signal may refer to a signal communicated from one subordinate entity (e.g., UE1) to another subordinate entity (e.g., UE2) without relaying that communication through the scheduling entity (e.g., UE or BS), even though the scheduling entity may be utilized for scheduling and/or control purposes. In some examples, the sidelink signals may be communicated using a licensed spectrum (unlike wireless local area networks, which typically use an unlicensed spectrum).

A UE may operate in various radio resource configurations, including a configuration associated with transmitting pilots using a dedicated set of resources (e.g., a radio resource control (RRC) dedicated state, etc.) or a configuration associated with transmitting pilots using a common set of resources (e.g., an RRC common state, etc.). When operating in the RRC dedicated state, the UE may select a dedicated set of resources for transmitting a pilot signal to a network. When operating in the RRC common state, the UE may select a common set of resources for transmitting a pilot signal to the network. In either case, a pilot signal transmitted by the UE may be received by one or more network access devices, such as an AN, or a DU, or portions thereof. Each receiving network access device may be configured to receive and measure pilot signals transmitted on the common set of resources, and also receive and measure pilot signals transmitted on dedicated sets of resources allocated to the UEs for which the network access device is a member of a monitoring set of network access devices for the UE. One or more of the receiving network access devices, or a CU to which receiving network access device(s) transmit the measurements of the pilot signals, may use the measurements to identify serving cells for the UEs, or to initiate a change of serving cell for one or more of the UEs.

Under 3GPP's 5G wireless communication standards, a structure has been defined for NR synchronization (synch) signals (NR-SS), also referred to as NR synchronization channels. Under 5G, a set of consecutive OFDM symbols carrying different types of synch signals (e.g., primary synchronization signal (PSS), secondary synchronization signal (SSS), time synchronization signal (TSS), PBCH) forms an SS block. In some cases, a set of one or more SS blocks may form an SS burst. In addition, different SS blocks may be transmitted on different beams to achieve beam-sweeping for synch signals, which may be used by a UE to quickly identify and acquire a cell. Further, one or more of the channels in an SS block may be used for measurements. Such measurements may be used for various purposes such as radio link management (RLM), beam management, etc. For example, a UE may measure the cell quality and report the quality back in the form of a measurement report, which may be used by the base station for beam management and other purposes.

FIG. 8 illustrates an example transmission timeline 800 of synchronization signals for a new radio telecommunications system, in accordance with aspects of the present disclosure. A BS, such as BS 110 shown in FIG. 1, may transmit an SS burst 802 during a period 806 of Y µsec, in accordance with certain aspects of the present disclosure. Operations 800 begin, at 802, by transmitting a synchronization signal (SS) burst. The SS burst may include N SS blocks 804 with indices of zero to N-1, and the BS may transmit different SS blocks of the burst using different transmit beams (e.g., for beam-sweeping). Each SS block may include, for example, a primary synchronization signal (PSS), a secondary synchronization signal (SSS), and one or more physical broadcast channels (PBCHs), also referred to as synchronization channels. The BS may transmit SS bursts on a periodic basis, with a period 808 of X msec.

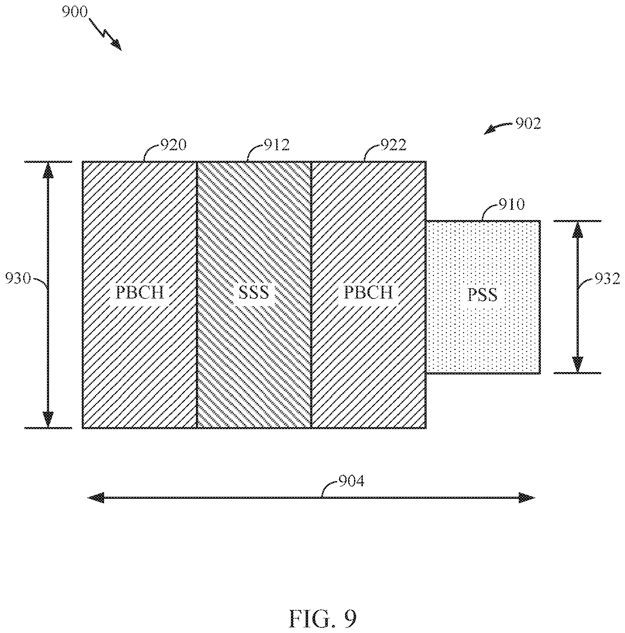

FIG. 9 illustrates an example resource mapping 900 for an exemplary SS block 902, in accordance with aspects of the present disclosure. The exemplary SS block may be transmitted by a BS, such as BS 110 in FIG. 1, over a period 904 (e.g., Y µsec, as shown in FIG. 8). The exemplary SS block includes a PSS 910, an SSS 912, and two PBCHs 920 and 922, although the disclosure is not so limited, and an SS block may include more or fewer synchronization signals and synchronization channels. As illustrated, a transmission bandwidth 930 of the PBCHs and SSS may be different from a transmission bandwidth 932 of the synchronization signals. For example, the transmission bandwidth of the PBCHs and SSS may be 288 tones, while the transmission bandwidth of the PSS may be 127 tones. While FIG. 9 is illustrated with SSS and PBCHs having the same bandwidth 930, the present disclosure is not so limited, and the disclosed techniques may be applicable to SS blocks in which SSS has a different bandwidth (e.g., equal to the bandwidth 932 of the PSS) from the PBCHs. Similarly, while FIG. 9 illustrates SS block as being the first PBCH 920, followed by the SSS 912, followed by the second PBCH 922, following by the PSS 910, the present disclosure is not so limited, and the disclosed techniques may be applicable to SS blocks having a different of synchronization signals, including SS blocks consisting of a PSS, followed by a first PBCH, followed by an SSS, and ending with a second PBCH.

As shown in FIG. 9, SS block consists of PSS, SSS and PBCH (and demodulation reference signals (DMRS) for PBCH). These signals are multiplexed in time-domain. There are different synchronization modes: initial acquisition in standalone, initial acquisition in non-standalone, and Synchronization in idle or connected modes.

As will be described herein, these different synchronization modes may have different PBCH TTI and PBCH transmission periodicities. As a result, system frame number bits may change from one TTI to a next TTI, presenting a challenge to maintain same content in each PBCH TIT

### EXAMPLE MULTIPLEXING OF CHANNEL STATE INFORMATION REFERENCE SIGNALS AND SYNCHRONIZATION SIGNALS

In communications systems operating according to NR techniques, the structure of reference signals (RS) and physical channels may be highly flexible. As used herein, "structure of reference signals and physical channels" may include resource element (RE) allocation patterns and time and/or frequency locations of signals. Therefore, for more efficient utilization of transmission resources, different reference signals and channels may be multiplexed on a set of same time and/or frequency resources.

According to aspects of the present disclosure, time and/or frequency resources can be grouped or divided into slots, RBs, symbols, and/or bandwidth parts. When two reference signals or channels are multiplexed, it is possible that some REs of a reference signal and/or channel may overlap with REs used by other reference signals or channels. This may be referred to as a collision of the overlapping reference signals and/or channels. Collision of resources between two reference signals and/or channels can be handled in many different ways. For example, multiplexing of a specific pair of RS and/or channel types that collide may be disallowed. In another example, one RS and/or channel may be shifted in time or across frequency, such that the collision is avoided. In yet another example, one RS and/or channel may puncture the other RS and/or channel on the resources that are in conflict.

In aspects of the present disclosure, techniques for multiplexing of CSI-RS and SS-block signals are provided.

According to aspects of the present disclosure, a network entity (e.g. a base station, which may be a next generation NodeB (gNB)) may multiplex channel state information reference signals (CSI-RSs) in a symbol period with signals of a synchronization signal (SS) block (e.g., an SS block as described above with reference to FIG. 9) and transmit the multiplexed CSI-RSs and SS block.

According to aspects of the present disclosure, CSI-RS multiplexed with SS block OFDM symbols may be used for beam management, and/or for channel tracking.

FIG. 10 illustrates example operations 1000 that are performed by a user equipment (UE) to receive CSI-RSs multiplexed with SS block signals, in accordance with the present invention. The operations 1000 may be performed, for example, by UE 120 (shown in FIGs. 1 and 4) utilizing one or more of the components shown in FIG. 4, such as the antennas 452, the modulator/demodulators 454, MIMO detector 456, receive processor 458, controller/processor 480, and memory 482.

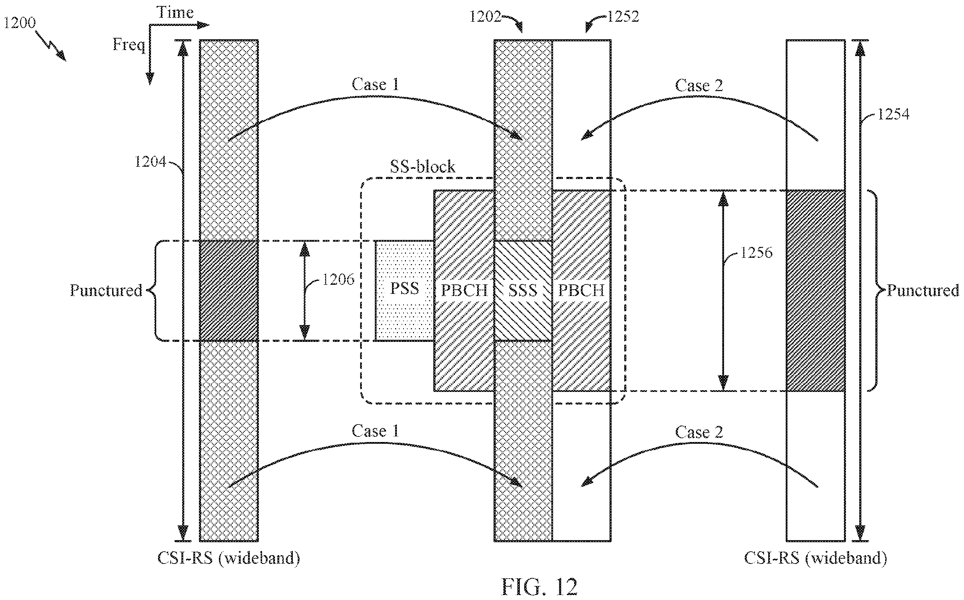

Operations 1000 begin, at block 1002, by the UE sampling subcarriers of a synchronization signal (SS) block based on a frequency density of channel state information (CSI) reference signals (CSI-RSs) multiplexed in a symbol period with the SS block. For example, UE 120 (shown in FIG. 1) samples subcarriers of an SS block (e.g., transmitted by BS 110) based on a frequency density of CSI-RSs multiplexed in a symbol period with the SS block (e.g., the CSI-RSs and SS block illustrated in FIG. 12, described below).

At block 1004, the UE performs measuring at least one of reference signal received power (RSRP) or CSI, based on the sampled subcarriers and the CSI-RSs, and reporting at least one of the RSRP or the CSI, based on the sampled subcarriers and the CSI-RSs. Continuing the example from above, the UE reports CSI, based on the sampled subcarriers (e.g., the subcarriers in block 1002) and the CSI-RSs.

According to aspects of the present disclosure, a UE may receive CSI-RS multiplexed with SS-block OFDM symbols. NR CSI-RS are typically transmitted in a wideband transmission (e.g., over an entire communications system bandwidth or one or more configured bandwidth parts (BWPs)) compared to the bandwidth of an SS-block transmission. Thus, the bandwidth of CSI-RS can partially overlap with the bandwidth of an SS-block, which is typically transmitted in a smaller bandwidth (e.g., 12 or 24 RBs).

In aspects of the present disclosure, CSI-RS may be frequency division multiplexed in a symbol period with a PSS or SSS symbol, which typically have a same bandwidth.

According to aspects of the present disclosure, CSI-RS may be frequency division multiplexed with a PBCH symbol, which may have a bandwidth different than a PSS or SSS bandwidth.

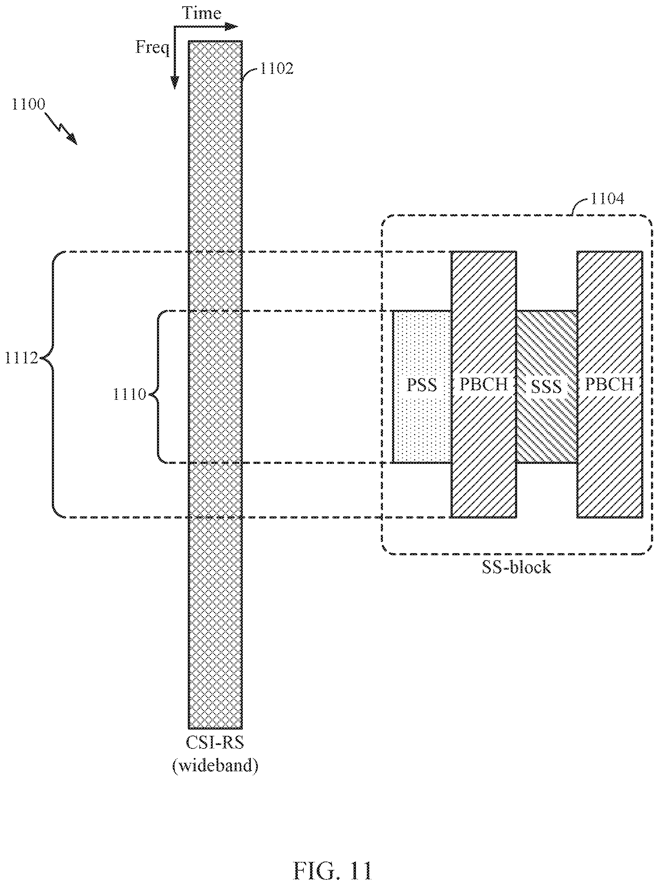

FIG. 11 is a diagram 1100 illustrating an exemplary CSI-RS bandwidth 1102 and exemplary bandwidths 1110 and 1112 of an SS block 1104.

According to aspects of the present disclosure, CSI-RS REs may be punctured within an overlapping frequency band of SS block signals to avoid collisions between the multiplexed CSI-RSs and SS block signals.

FIG. 12 is a diagram 1200 illustrating exemplary techniques 1202 and 1252 for puncturing REs of a CSI-RS that is multiplexed with a signal of an SS block. In the technique 1202, the CSI-RS is multiplexed in a symbol period with an SSS. REs of the CSI-RS bandwidth 1204 that overlap the SSS bandwidth 1206 are punctured by the SSS. A similar technique may be used when CSI-RS is multiplexed in a symbol period with a PSS, if the PSS and SSS have a same bandwidth. If the PSS and SSS have different bandwidths, then REs of the CSI-RS bandwidth are punctured by the PSS in the PSS bandwidth. In the exemplary technique 1252, the CSI-RS is multiplexed in a symbol period with a PBCH. REs of the CSI-RS bandwidth 1254 that overlap the PBCH bandwidth 1256 are punctured by the PBCH.

According to aspects of the present disclosure, subcarriers of CSI-RS (i.e., subcarriers which contain CSI-RSs during a symbol period) are typically equally spaced over a bandwidth of a frequency band, which may improve channel estimation performance by devices receiving the CSI-RSs. In addition, equally spacing CSI-RSs over an entire channel bandwidth enables use of efficient, low-complexity channel estimation algorithms, at least for wideband CSI-RSs, e.g., FFT-based channel estimation algorithms.

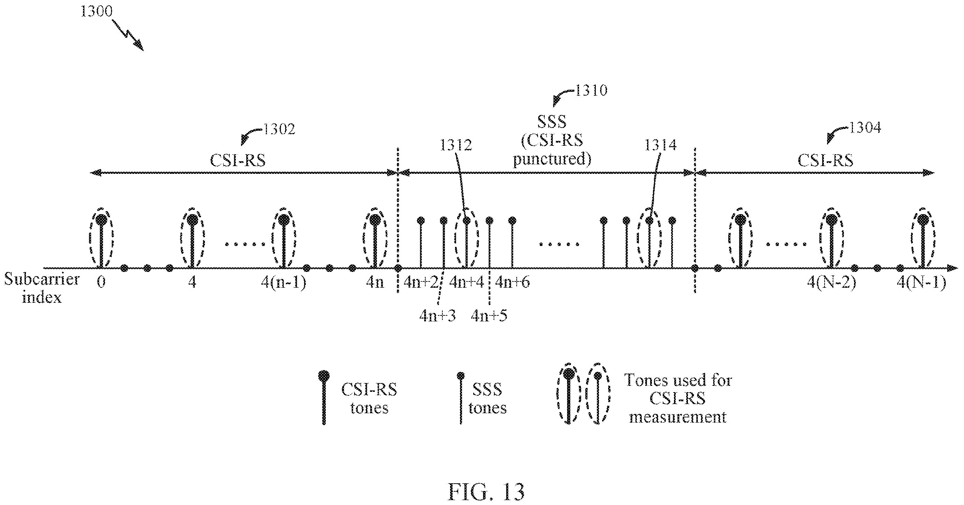

In aspects of the present disclosure, puncturing of CSI-RS REs, e.g., as illustrated in FIG. 12, may disrupt the typical equally spaced pattern of the CSI-RS REs, as described below with reference to FIG. 13.

According to aspects of the present disclosure, some subcarriers (e.g., tones) in a multiplexed SS block and CSI-RS OFDM symbol (that is, an OFDM symbol in which SS and CSI-RS are multiplexed) are treated as CSI-RS tones (e.g., subcarriers) and used for CSI-RS-based measurement. That is, a device receiving the CSI-RS and the SS block can determine CSI based on the CSI-RSs and the tones of the SS block, as described above with reference to FIG. 10. For example, SSS subcarriers or demodulation reference signals (DMRS) for PBCH can be used for CSI-RS-based measurement. Determining CSI based on the CSI-RSs and the tones of the SS block is feasible because SS block symbols (e.g., PSS, SSS, or PBCH symbols) typically have a higher frequency-domain density than CSI-RSs have.

In aspects of the present disclosure, CSI-RS and SSS may be multiplexed in a same symbol period. For example, a CSI-RS sequence of length N may be mapped to every 4th subcarrier, that is subcarriers with index 4n, for n=0,..., N-1, within a CSI-RS bandwidth. In the example, the CSI-RS may be referred to as having a frequency-domain density equal to ¼.Still in the example, an SSS sequence is mapped to every subcarrier within the SSS bandwidth. In the example, CSI-RS subcarriers within the SSS bandwidth are punctured by the SSS transmission, as described above. Continuing the example, for CSI-RS based measurements, such as determining CSI, RSRP, etc., every fourth subcarrier (e.g., index 4n, n=0,..., N-1) may be used. In the example, a subcarrier of index 4n may contain either a CSI-RS sequence or an SSS sequence. That is, measurements may be made of subcarriers carrying an SSS signal, and those measurements used to determine CSI, RSRP, or other parameters that may be determined based on measurements of subcarriers carrying CSI-RS sequences in communications systems operating according to previously known techniques.

FIG. 13 illustrates puncturing of a CSI-RS signal by an SSS signal in a bandwidth 1300, according to aspects of the present disclosure and as shown in FIG. 12 at 1202. As described previously, the CSI-RS may be transmitted on every fourth subcarrier (e.g., tone), as shown at 1302 and 1304. As previously mentioned, an SSS may be transmitted on each subcarrier in an SSS bandwidth, puncturing the CSI-RS signals in that bandwidth, as shown at 1310. As described above, every fourth subcarrier in the SSS bandwidth, such as those labeled 1312 and 1314, in the SSS bandwidth may be used for CSI-RS measurement (e.g., measured and used to determine CSI, RSRP, etc.). Thus, as described above, measurements may be made of subcarriers carrying an SSS signal and those measurements used to determine CSI, RSRP, or other parameters that may be determined based on measurements of subcarriers carrying CSI-RS sequences in communications systems operating according to previously known techniques.

According to aspects of the present disclosure, PBCH data or PBCH DMRS subcarriers can be used for CSI-RS measurement, when CSI-RSs are multiplexed in a symbol period with PBCH signals. Using PBCH data or PBCH DMRS subcarriers for CSI-RS measurement may be feasible because SS block symbols (e.g., symbols of a PSS, SSS, or PBCH) typically have a higher frequency domain density than CSI-RS. As described herein, DMRS sequence to RE (tone) mapping may involve a Cell ID dependent shift of tones used for DMRS for PBCH. For example, the Cell ID dependent shift may be applied to a base set of tones for DMRS.

According to aspects of the present disclosure, CSI-RS and SS block subcarriers can have different power. That is, CSI-RS signals may be transmitted with a different power per subcarrier than SS block signals are transmitted with. It is desirable for the power difference (e.g., power offset) between CSI-RS subcarriers and SS block subcarriers to be known to a wireless device (e.g., a UE) receiving the CSI-RS and SS block, in order for the wireless device to make accurate measurements based on the CSI-RS subcarriers and SS block subcarriers.

In aspects of the present disclosure, a power offset (e.g., a power difference) between CSI-RS subcarriers and SS block (e.g., PSS, SSS, and/or PBCH) subcarriers may be added to a CSI-RS configuration parameter set and be signaled to a UE or UEs. A UE receiving the power offset information may use the power offset information in calculating CSI, RSRP, and/or other parameters based on measurements of the CSI-RS subcarriers, the SS block subcarriers, and the power offset information. The power offset information may be signaled as a ratio between the CSI-RS power and the SS block power, a difference in decibels (dB) between the CSI-RS power and the SS block power, and/or an indication of a difference in number of decibels between the CSI-RS power and the SS block power.

According to aspects of the present disclosure, the power offset (e.g., power difference) between CSI-RS subcarriers and SS block subcarriers may be signaled (e.g., by a BS) to UEs via broadcasted system information, via radio resource control (RRC) signaling (e.g., in an RRC information element (IE)), via a medium access control (MAC) control element (MAC-CE), or via a downlink control information (DCI).

In aspects of the present disclosure, the power offset can change according to the SS block power variation over time. When the power offset changes, a base station (e.g., a gNB) may signal the change to served UEs.

According to aspects of the present disclosure, when CSI-RS signals and PBCH signals are multiplexed in a same symbol period (e.g., as illustrated at 1252 in FIG. 12), the CSI-RS signals and DMRS transmitted with the PBCH can be configured to use a same frequency grid. For example, both CSI-RS and PBCH DMRS may be mapped to subcarriers having indices 4n+k. In another example, a frequency density of PBCH DMRS can be an integral multiple of a frequency density of CSI-RS. In the example, PBCH DMRS may have a frequency-domain density of ¼ and be mapped to subcarriers with indices according to a 4n+k pattern, while CSI-RS may have a frequency-domain density of 1/8 and be mapped to subcarrier with indices according to an 8n+k pattern.

In aspects of the present disclosure, paging, remaining minimum system information (RMSI), other system information (OSI), control channels, signals of a random access procedure (e.g., message 2 of a random access procedure), and/or other channels may be transmitted via tones outside SS block OFDM symbols in addition to CSI-RSs being transmitted via those tones. Those CSI-RSs can serve as phase reference signals for those channels (i.e., the RMSI, OSI, control channels, signals of a random access procedure, and/or other channels). The control channels may be one or more of a group common PDCCH, a PDCCH transmitted in a common search space (CSS), or a PDCCH transmitted in a UE-specific search space (USS). That is, RMSI, control channels, and/or other channels (e.g., PDSCHs) may be multiplexed with CSI-RSs in a same symbol period as portion(s) of an SS block on tones outside of the SS block OFDM symbols, and the CSI-RSs can serve as phase reference signals for the RMSI, control channels, and or other channels.

In aspects of the present disclosure, CSI-RS multiplexed with SS block OFDM symbols may be configured to have a scrambling identifier (ID) that may be linked to one or a group of UEs for broadcast channels. That is, a UE may determine a scrambling ID used in scrambling a CSI-RS based on presence of another signal in a same symbol period. For example, a paging signal may be transmitted in a same symbol period as CSI-RS. In the example, the presence of the paging signals indicates a transmission of control and/or data for paging to a group of UEs, and the scrambling ID can be a function of a paging radio network temporary identifier (P-RNTI) of the group of UEs that are the intended recipients of the paging signals. In the example, a UE can determine that the P-RNTI is the scrambling ID used for scrambling CSI-RS in the symbol period. In another example, a second message of a random access channel (RACH) procedure (e.g., Msg2 of a random access procedure) may be transmitted in a same symbol period as CSI-RS. In the example, the presence of those signals indicates a transmission of control and/or data for Msg2, and the scrambling ID of the CSI-RSs can be linked to (e.g., can be a function of) an RA-RNTI or RACH resource pairing with the SS block.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for."

The various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal 120 (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer-readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims. The present invention is defined by the appended independent claims.

## Claims

1. A method for wireless communications by a user equipment, UE (120), comprising:
sampling (1002) subcarriers of a synchronization signal, SS, block based on a frequency density of channel state information, CSI, reference signals, CSI-RSs, multiplexed in a symbol period with the SS block;
obtaining a power difference between the sampled subcarriers and a set of subcarriers used for the CSI-RSs; and
performing (1004):
measuring at least one of reference signal received power, RSRP, or CSI, based on the sampled subcarriers and the CSI-RSs, wherein said measuring the RSRP or the CSI is based on the obtained power difference, and
reporting at least one of the RSRP or the CSI, based on the sampled subcarriers and the CSI-RSs.

2. The method of claim 1, wherein the sampled subcarriers are used for a primary synchronization signal, PSS, of the SS block.

3. The method of claim 1, wherein the sampled subcarriers are used for a secondary synchronization signal, SSS, of the SS block.

4. The method of claim 1, wherein the sampled subcarriers are used for data or demodulation reference signals, DMRS, of a physical broadcast channel, PBCH, of the SS block.

5. The method of claim 1, wherein a frequency density of a signal of the SS block in the symbol period is an integral multiple of the frequency density of the CSI-RSs.

6. The method of claim 1, wherein obtaining the power difference comprises:
receiving the power difference via broadcasted system information, or
receiving the power difference via radio resource control, RRC, signaling from a network entity, or receiving the power difference via a medium access control, MAC, control element, MAC-CE, or
receiving the power difference via a downlink control information, DCI.

7. The method of claim 1, further comprising:
receiving a signal in the symbol period of the SS block; and
using the CSI-RSs on subcarriers other than the subcarriers of the SS block as a phase reference signal for the signal.

8. The method of claim 7, wherein the signal comprises:
a paging signal, or a message 2, Msg2, of a random access procedure, or a remaining minimum system information, RMSI, signal, or
an other system information, OSI, signal, or
at least one of: a control channel, a group common physical downlink control channel, PDCCH, a PDCCH in a UE-specific search space, USS, or a PDCCH in a common search space, CSS.

9. The method of claim 1, further comprising:
using the CSI-RSs on subcarriers other than the subcarriers of the SS block for beam management.

10. The method of claim 1, further comprising:
using the CSI-RSs on subcarriers other than the subcarriers of the SS block for channel tracking.

11. The method of claim 1, further comprising:
receiving the CSI-RSs on subcarriers other than the subcarriers of the SS block; and
determining a scrambling identifier, ID, of the CSI-RSs based on presence of another signal.

12. The method of claim 11, wherein the other signal comprises:
a paging signal, or
a remaining minimum system information, RMSI, signal, or a control channel.

13. The method of claim 11, wherein the scrambling ID is linked to a group of UEs (120) that are intended recipients of the other signal or wherein the scrambling ID is linked to the ID of the SS block with which the CSI-RSs are multiplexed in the symbol period.

14. A user equipment, UE (120), for wireless communications, comprising:
means for sampling subcarriers of a synchronization signal, SS, block based on a frequency density of channel state information, CSI, reference signals, CSI-RSs, multiplexed in a symbol period with the SS block;
means for obtaining a power difference between the sampled subcarriers and a set of subcarriers used for the CSI-RSs; and
means for performing:
measuring at least one of reference signal received power, RSRP, or CSI, based on the sampled subcarriers and the CSI-RSs, wherein said measuring the RSRP or the CSI is based on the obtained power difference, and
reporting at least one of the RSRP or the CSI, based on the sampled subcarriers and the CSI-RSs.

15. A computer-readable medium storing instructions that, when executed by a processing system, cause the processing system to perform a method according to any of claims 1 to 13.

## Patentansprüche

1. Ein Verfahren für drahtlose Kommunikationen durch ein Benutzergerät, UE (120), aufweisend:
Abtasten (1002) von Unterträgern eines Synchronisationssignal-, SS-, Blocks basierend auf einer Frequenzdichte von Kanalzustandsinformations-, CSI-, Referenzsignalen, CSI-RSs, gemultiplext in einer Symbolperiode mit dem SS-Block;
Erhalten einer Leistungsdifferenz zwischen den abgetasteten Unterträgern und einem Satz von Unterträgern, die für die CSI-RSs verwendet werden; und
Durchführen (1004) von:
Messen von zumindest einem von Referenzsignalempfangsleistung, RSRP, oder CSI, basierend auf den abgetasteten Unterträgern und den CSI-RSs, wobei das Messen der RSRP oder der CSI auf der erhaltenen Leistungsdifferenz basiert, und
Berichten von zumindest einer der RSRP oder der CSI, basierend auf den abgetasteten Unterträgern und den CSI-RSs.

2. Das Verfahren nach Anspruch 1, wobei die abgetasteten Unterträger für ein primäres Synchronisationssignal, PSS, des SS-Blocks verwendet werden.

3. Das Verfahren nach Anspruch 1, wobei die abgetasteten Unterträger für ein sekundäres Synchronisationssignal, SSS, des SS-Blocks verwendet werden.

4. Das Verfahren nach Anspruch 1, wobei die abgetasteten Unterträger für Daten- oder Demodulationsreferenzsignale, DMRS, eines physikalischen Broadcast-Kanals, PBCH, des SS-Blocks verwendet werden.

5. Das Verfahren nach Anspruch 1, wobei eine Frequenzdichte eines Signals des SS-Blocks in der Symbolperiode ein ganzzahliges Vielfaches der Frequenzdichte der CSI-RSs ist.

6. Das Verfahren nach Anspruch 1, wobei das Erhalten der Leistungsdifferenz aufweist:
Empfangen der Leistungsdifferenz über Funkressourcensteuerungs-, RRC-,
Signalisierung von einer Netzwerkeinheit, oder Empfangen der Leistungsdifferenz über ein Medienzugangssteuerungs-, MAC-, Steuerelement, MAC-CE, oder
Empfangen der Leistungsdifferenz über eine Abwärtsverbindungs-Steuerinformation, DCI.

7. Das Verfahren nach Anspruch 1, weiter aufweisend:
Empfangen eines Signals in der Symbolperiode des SS-Blocks; und
Verwenden der CSI-RSs auf Unterträgern außer den Unterträgern des SS-Blocks als ein Phasenreferenzsignal für das Signal.

8. Das Verfahren nach Anspruch 7, wobei das Signal aufweist:
ein Paging-Signal, oder eine Nachricht 2, Msg2, einer Zufallszugriffsprozedur, oder ein verbleibendes Minimum-Systeminformations-, RMSI-, Signal, oder ein anderes Systeminformations-, OSI-, Signal, oder
zumindest eines von: einem Steuerkanal, einem gemeinsamen physikalischen Abwärtsverbindungs-Steuerkanal, PDCCH, einem PDCCH in einem UEspezifischen Suchraum, USS, oder einem PDCCH in einem gemeinsamen Suchraum, CSS.

9. Das Verfahren nach Anspruch 1, weiter aufweisend:
Verwenden der CSI-RSs auf Unterträgern außer der Unterträger des SS-Blocks zur Strahlverwaltung.

10. Das Verfahren nach Anspruch 1, weiter aufweisend:
Verwenden der CSI-RSs auf Unterträgern außer der Unterträger des SS-Blocks zur Kanalverfolgung.

11. Das Verfahren nach Anspruch 1, weiter aufweisend:
Empfangen der CSI-RSs auf Unterträgern außer der Unterträger des SS-Blocks; und
Bestimmen einer Verschlüsselungskennung, ID, der CSI-RSs basierend auf dem Vorhandensein eines anderen Signals.

12. Das Verfahren nach Anspruch 11, wobei das andere Signal aufweist:
ein Paging-Signal, oder
ein verbleibendes Minimum-Systeminformations-, RMSI-, Signal, oder ein Steuerkanal.

13. Das Verfahren nach Anspruch 11, wobei die Verschlüsselungs-ID mit einer Gruppe von UEs (120) verknüpft ist, die beabsichtigte Empfänger des anderen Signals sind, oder wobei die Verschlüsselungs-ID mit der ID des SS-Blocks verknüpft ist, mit dem die CSI-RSs in der Symbolperiode gemultiplext sind.

14. Ein Benutzergerät, UE (120), für drahtlose Kommunikationen, aufweisend:
Mittel zum Abtasten von Unterträgern eines Synchronisationssignal-, SS-, Blocks basierend auf einer Frequenzdichte von Kanalzustandsinformations-, CSI-, Referenzsignalen, CSI-RSs, gemultiplext in einer Symbolperiode mit dem SS-Block;
Mittel zum Erhalten einer Leistungsdifferenz zwischen den abgetasteten Unterträgern und einem Satz von Unterträgern, die für die CSI-RSs verwendet werden; und
Mittel zum Durchführen von:
Messen von zumindest einem von Referenzsignalempfangsleistung, RSRP, oder CSI, basierend auf den abgetasteten Unterträgern und den CSI-RSs, wobei das Messen der RSRP oder der CSI auf der erhaltenen Leistungsdifferenz basiert, und
Berichten von zumindest einer der RSRP oder der CSI, basierend auf den abgetasteten Unterträgern und den CSI-RSs.

15. Ein computerlesbares Medium, das Anweisungen speichert, die, wenn sie von einem Verarbeitungssystem ausgeführt werden, das Verarbeitungssystem veranlassen, ein Verfahren nach einem der Ansprüche 1 bis 13 durchzuführen.

## Revendications

1. Un procédé de communication sans fil par un équipement utilisateur, UE (120), comprenant :
l'échantillonnage (1002) de sous-porteuses d'un bloc de signal de synchronisation, SS, sur la base d'une densité de fréquence de signaux de référence d'information d'état de canal, CSI, CSI-RS, multiplexés dans une période de symbole avec le bloc SS ;
l'obtention d'une différence de puissance entre les sous-porteuses échantillonnées et un ensemble de sous-porteuses utilisées pour les CSI-RS ; et
la réalisation (1004) :
de la mesure d'au moins une parmi une puissance reçue de signal de référence, RSRP, ou une CSI, sur la base des sous-porteuses échantillonnées et des CSI-RS, dans lequel ladite mesure de la RSRP ou de la CSI est basée sur la différence de puissance obtenue, et
du rapport d'au moins une parmi la RSRP ou la CSI, sur la base des sous-porteuses échantillonnées et des CSI-RS.

2. Le procédé selon la revendication 1, dans lequel les sous-porteuses échantillonnées sont utilisées pour un signal de synchronisation primaire, PSS, du bloc SS.

3. Le procédé selon la revendication 1, dans lequel les sous-porteuses échantillonnées sont utilisées pour un signal de synchronisation secondaire, SSS, du bloc SS.

4. Le procédé selon la revendication 1, dans lequel les sous-porteuses échantillonnées sont utilisées pour des données ou des signaux de référence de démodulation, DMRS, d'un canal physique de broadcast, PBCH, du bloc SS.

5. Le procédé selon la revendication 1, dans lequel une densité de fréquence d'un signal du bloc SS dans la période de symbole est un multiple entier de la densité de fréquence des CSI-RS.

6. Le procédé selon la revendication 1, dans lequel l'obtention de la différence de puissance comprend :
la réception de la différence de puissance via une information de système diffusée par broadcast, ou
la réception de la différence de puissance via une signalisation de contrôle de ressource radio, RRC, à partir d'une entité de réseau, ou la réception de la différence de puissance via un élément de contrôle de contrôle d'accès au support, MAC, MAC-CE, ou
la réception de la différence de puissance via une information de contrôle de liaison descendante, DCI.

7. Le procédé selon la revendication 1, comprenant en outre :
la réception d'un signal dans la période de symbole du bloc SS ; et
l'utilisation des CSI-RS sur des sous-porteuses autres que les sous-porteuses du bloc SS comme un signal de référence de phase pour le signal.

8. Le procédé selon la revendication 7, dans lequel le signal comprend :
un signal de paging, ou un message 2, Msg2, d'une procédure d'accès aléatoire, ou un signal d'information de système minimale restante, RMSI, ou
un signal d'autre information de système, OSI, ou
au moins un parmi : un canal de contrôle, un canal physique de contrôle de liaison descendante, PDCCH, commun à un groupe, un PDCCH dans un espace de recherche spécifique à l'UE, USS, ou un PDCCH dans un espace de recherche commun, CSS.

9. Le procédé selon la revendication 1, comprenant en outre :
l'utilisation des CSI-RS sur des sous-porteuses autres que les sous-porteuses du bloc SS pour la gestion de faisceaux.

10. Le procédé selon la revendication 1, comprenant en outre :
l'utilisation des CSI-RS sur des sous-porteuses autres que les sous-porteuses du bloc SS pour le suivi de canaux.

11. Le procédé selon la revendication 1, comprenant en outre :
la réception des CSI-RS sur des sous-porteuses autres que les sous-porteuses du bloc SS ; et
la détermination d'un identificateur, ID, de brouillage des CSI-RS sur la base de la présence d'un autre signal.

12. Le procédé selon la revendication 11, dans lequel l'autre signal comprend :
un signal de paging, ou
un signal d'information de système minimale restante, RMSI, ou un canal de contrôle.

13. Le procédé selon la revendication 11, dans lequel l'ID de brouillage est lié à un groupe d'UE (120) qui sont des destinataires prévus de l'autre signal ou dans lequel l'ID de brouillage est lié à l'ID du bloc SS avec lequel les CSI-RS sont multiplexés dans la période de symbole.

14. Un équipement utilisateur, UE (120), pour la communication sans fil, comprenant :
un moyen pour échantillonner des sous-porteuses d'un bloc de signal de synchronisation, SS, sur la base d'une densité de fréquence de signaux de référence d'information d'état de canal, CSI, CSI-RS, multiplexés dans une période de symbole avec le bloc SS ;
un moyen pour obtenir une différence de puissance entre les sous-porteuses échantillonnées et un ensemble de sous-porteuses utilisées pour les CSI-RS ; et
un moyen pour réaliser :
la mesure d'au moins une parmi une puissance reçue de signal de référence, RSRP, ou une CSI, sur la base des sous-porteuses échantillonnées et des CSI-RS, dans lequel ladite mesure de la RSRP ou de la CSI est basée sur la différence de puissance obtenue, et
le rapport d'au moins une parmi la RSRP ou la CSI, sur la base des sous-porteuses échantillonnées et des CSI-RS.

15. Un support lisible par calculateur stockant des instructions qui, quand elles sont exécutées par un système de traitement, amènent le système de traitement à réaliser un procédé selon une des revendications 1 à 13.
